(19) Europäisches Patentamt
European Patent Office
Office européen des brevets

(11) **EP 4 686 645 A1**

(12) **EUROPEAN PATENT APPLICATION**

(43) Date of publication:
**04.02.2026 Bulletin 2026/06**

(21) Application number: 25192538.4

(22) Date of filing: **29.07.2025**

(51) International Patent Classification (IPC):
**B62M 11/14** *(2006.01)*

(52) Cooperative Patent Classification (CPC):
**B62M 3/00;** B62M 9/08; B62M 2003/006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024 IT 202400017692**

(71) Applicant: **Armando, Valerio**
**12023 Caraglio (Cuneo) (IT)**

(72) Inventor: **Armando, Valerio**
**12023 Caraglio (Cuneo) (IT)**

(74) Representative: **Vanzini, Christian et al**
**Jacobacci & Partners S.p.A.**
**Corso Emilia 8**
**10152 Torino (IT)**

(54) **CRANKSET WITH RELATIVE ROTATION OF CRANK ARMS**

(57)     A crankset (10) comprises a fixed ring gear (12) and a moving ring gear (14) defining a main axis of rotation (x), two crank arms (16, 18) with proximal ends (16b, 18b) coupled to the ring gears (12, 14) and rotatable with respect thereto, and distal ends (16a, 18a) defining a circumference (C). The crank arms (16, 18) are rotatable at a first rotational speed (w1) in at least a first arc (A1) of the circumference (C). Additional relative rotation means (24) are configured to rotate at least one crank arm (16, 18) at a second rotational speed (w2), greater than the first (w1), in at least a second arc (A2), different from the first (A1), in such a manner that the crank arm forms with the other crank arm an obtuse angle ($\alpha$) in the direction of rotation of the crank arms when the distal end (16b, 18b) of the other crank arm is at a vertical minimum point (I) of the circumference (C).

FIG.3

## Description

Technical Field

The present invention relates to a crankset configured to impart an additional relative rotation to one crank arm with respect to another crank arm. The invention is applicable to human-powered vehicles and/or apparatuses. In particular, but not exclusively, the invention is applicable to bicycles.

Prior Art

Typically, bicycle cranksets comprise a chainring and a pair of crank arms coupled with the chainring. The crank arms have a distal end configured for coupling with a pedal for user interface, and a proximal end arranged to be coupled with the chainring in such a manner that the crank arms are rotatable about a central axis of rotation of the chainring and that the respective distal ends define a circumference during their rotational movement. The chainring is configured to transfer the rotational movement of the crank arms to the rear wheel of the bicycle by means of, for example, a chain drive system.

The crank arms are coupled with the chainring so as to be parallel to each other and to extend in opposite directions with respect to the central axis of rotation. This configuration of the crank arms allows the user to apply force alternately on the first and on the second crank arm, thereby obtaining a rotational movement of the crankset and the resulting propulsion of the bicycle.

During pedalling, there is a position in which the crank arms are arranged vertically, one facing upwards and the other facing downwards, so that the respective distal ends are located at the maximum and minimum vertical point of the circumference. These positions, also known in the field as "top dead centre" and "bottom dead centre," occur at the end of the pushing action on one of the two crank arms by the user and are highly disadvantageous. In fact, the user must apply force to move the crank arm out of the dead point, and then apply additional force to impart rotational movement to the crankset and the resulting propulsion of the bicycle.

Summary of the Invention

A general object of the present invention is to implement a crankset capable of preventing the dead point position of the crank arms during pedalling. More specifically, an object of the invention is to produce a bicycle that makes the pedalling push phase easier for the user.

Said and other objects and advantages, which will become clearer below, are achieved according to the present invention having the characteristics set out in independent claim 1 and in independent claim 14. Preferred embodiments of the invention are defined in the dependent claims.

In summary, according to a first aspect, the present invention concerns a crankset for a human-powered vehicle and/or apparatus adapted to impart an additional relative rotation to one crank arm with respect to another crank arm, comprising a fixed ring gear and a moving ring gear coaxial to each other and defining a main axis of rotation, wherein the moving ring gear is an internal toothed ring gear and the fixed ring gear has an inner raceway. The crankset also comprises a first crank arm and a second crank arm, each having a distal end configured to be coupled with a respective pedal, and a proximal end configured to be coupled with the fixed ring gear and with the moving ring gear. Each crank arm is configured to be rotatable about the main axis of rotation in such a manner that the distal end of the crank arm defines a circumference, and each crank arm is rotatable at a first rotational speed in at least a first arc of said circumference. The raceway of the fixed ring gear has a first flat portion forming with the crank arm the first arc of the circumference and a second portion provided with a plurality of depressions forming with the crank arm a second arc of the circumference. The crankset also comprises additional relative rotation means connected with a proximal end of the crank arm and with the ring gears. The additional relative rotation means comprise, for each crank arm, a pinion and a support element for supporting a plurality of bearings, wherein the pinion and the support element are coaxial with each other and rotationally integral about a secondary axis of rotation, and the pinion is configured to engage with the moving ring gear, and the support element and the associated bearings are configured to engage with the raceway of the fixed ring gear in such a manner that the bearings roll on the first flat portion of the raceway and the support element and the pinion rotate about the secondary axis of rotation on the second portion of the raceway. The additional relative rotation means are configured to rotate at least one of the first and second crank arms at a second rotational speed, greater than the first rotational speed, in the second arc of the circumference in such a manner that said crank arm forms with the other crank arm an obtuse angle in the direction of rotation of the crank arms when the other crank arm is arranged with its distal end at a vertical minimum point of the circumference.

According to a second aspect, the present invention concerns a crankset for a human-powered vehicle and/or apparatus adapted to impart an additional relative rotation to one crank arm relative to another crank arm, comprising a first fixed ring gear, a second fixed ring gear, a first moving ring gear, and a second moving ring gear coaxial to one another and defining a main axis of rotation, wherein the fixed ring gears and the moving ring gears are internal toothed ring gears. The crankset also comprises a first crank arm and a second crank arm, each of which has a distal end configured to be coupled with a respective pedal, and a proximal end configured to be coupled with the fixed ring gear and with the moving ring gear. The first fixed ring gear and the first moving ring gear are coupled with the first crank arm, and the second fixed ring gear and the second moving ring gear are coupled with the second crank arm. Each crank arm is configured to be rotatable about the main axis of rotation in such a manner that the distal end of the crank arm defines a circumference, and each crank arm is rotatable at a first rotational speed in at least a first arc of said circumference. The crankset also comprises additional relative rotation means connected with a proximal end of the crank arm and with the ring gears. The additional relative rotation means comprise a first gear coupled with the first fixed ring gear and with the first moving ring gear, a first pinion coupled with the first moving ring gear and a first motor arranged to drive said first pinion, and comprise a second gear coupled with the second fixed ring gear and with the second moving ring gear, a second pinion coupled with the second moving ring gear and a second motor arranged to drive said second pinion. The additional relative rotation means are configured to rotate at least one of the first and second crank arms at a second rotational speed, greater than the first rotational speed, in a second arc of the circumference in such a manner that said crank arm forms with the other crank arm an obtuse angle in the direction of rotation of the crank arms when the other crank arm is arranged with its distal end at a vertical minimum point of the circumference.

According to another aspect, the present invention concerns a crankset for a human-powered vehicle and/or apparatus adapted to impart an additional relative rotation to one crank arm relative to another crank arm, comprising a fixed ring gear and a moving ring gear coaxial to each other and defining a main axis of rotation, a first crank arm and a second crank arm, each having a distal end configured to be coupled with a respective pedal, and a proximal end configured to be coupled with the fixed ring gear and the moving ring gear. Each crank arm is configured to be rotatable about the main axis of rotation in such a manner that the distal end of the crank arm defines a circumference, and each crank arm is rotatable at a first rotational speed in at least a first arc of said circumference. The crankset also comprises additional relative rotation means connected with a proximal end of the crank arm and with the ring gears, and configured to rotate at least one of the first and second crank arms at a second rotational speed, greater than the first rotational speed, in at least a second arc of the circumference in such a manner that said crank arm forms with the other crank arm an obtuse angle in the direction of rotation of the crank arms when the other crank arm is arranged with its distal end at a vertical minimum point of the circumference.

According to a further aspect, the present invention concerns a bicycle comprising a crankset according to the first aspect of the invention and configured to impart an additional relative rotation to one crank arm relative to another crank arm of the pair of crank arms.

Brief Description of the Drawings

The features and advantages of the invention will become apparent from the detailed description of some embodiments thereof made with reference to the accompanying drawings, provided by way of example and not of limitation, in which:

Figure 1 is a top view of a first embodiment of the crankset,
Figure 2 is a sectional view of the crankset of figure 1,
Figure 3 is an exploded perspective view of the crankset of figure 1,
Figure 4 is a perspective view of a crank arm with additional relative rotation means of the first embodiment of the crankset,
Figure 5 is a perspective view of a fixed ring gear of the first embodiment of the crankset,
Figure 6 is a perspective view of a moving ring gear of the first embodiment of the crankset,
Figures 7A-7F show successive rotation steps of the crank arms of the first embodiment of the crankset,
Figure 8 is a top view of a part of a second embodiment of the crankset,
Figure 9 is a top and sectional view of the second embodiment of the crankset,
Figure 10 is an exploded perspective view of the part of the crankset of figure 8,
Figure 11 is an exploded perspective view of the additional relative rotation means of the second embodiment of the crankset,
Figures 12A-12C show successive rotation steps of the crank arms of the second embodiment of the crankset,
Figure 13 is a side view of a bicycle equipped with the first embodiment of the crankset,
Figure 14 is a partial side view, in an enlarged scale, of a part of the bicycle, indicated as detail B in figure 13,
Figure 15 is a side view of a bicycle equipped with the second embodiment of the crankset, and
Figure 16 is a partial side view, in an enlarged scale, of a part of the bicycle, indicated as detail A in figure 15.

Detailed Description

According to the present invention, a crankset or drive assembly 10 for a human-powered vehicle and/or apparatus, in particular for bicycles or exercise bikes, comprises at least one fixed ring gear 12, 12a, 12b and at least one moving ring gear 14, 14a, 14b, coaxial with each other and defining a main axis of rotation x about which at least one moving ring gear 14, 14a, 14b rotates.

Hereinafter, in this description, terms and references indicating directions such as "axial" and "radial" are to be interpreted with reference to the main axis of rotation x, unless otherwise stated.

The crankset 10 comprises a first crank arm 16 and a second crank arm 18, each of which has a distal end 16a, 18a configured to be coupled with a respective pedal 20, 22, and a proximal end 16b, 18b configured to be coupled with the fixed ring gear 12, 12a, 12b and with the moving ring gear 14, 14a, 14b.

Each crank arm 16, 18 is configured to be rotatable about the main axis of rotation x in such a manner that the distal end 16a, 18a of the crank arm 16, 18 defines a circumference C. The crank arms 16, 18 are rotatable at a first rotational speed w1 in at least a first arc A1 of the circumference C.

The crankset 10 also comprises additional relative rotation means 24 configured to connect the proximal ends 16b, 18b of the crank arms 16, 18 with the at least one fixed ring gear 12, 12a, 12b and the at least one moving ring gear 14, 14a, 14b.

The additional relative rotation means 24 are also configured to rotate at least one of the first 16 and second 18 crank arms at a second rotational speed w2, greater than the first rotational speed w1, in a second arc A2 of the circumference C in such a manner that the crank arm, which rotates at the second rotational speed w2, forms with the other crank arm, which rotates at the first rotational speed w1, an obtuse angle $\alpha$ in the direction of rotation of the crank arms when the crank arm rotating at the first rotational speed is arranged with the respective distal end 16b, 18b at a vertical minimum point I of the circumference C or bottom dead centre.

In other words, when the crank arm rotating at the first rotational speed is arranged with the respective distal end 16b, 18b at a vertical minimum point I of the circumference C, the two crank arms 16, 18 do not extend in opposite directions with respect to the main axis of rotation x, that is, they are not parallel.

In one embodiment, the second arc A2 of the circumference C may be different from the first arc A1 of the circumference.

In use, that is, when the crankset 10 is mounted on a bicycle, the vertical minimum point I of the circumference C may correspond to the condition in which the crank arm 16, 18 is perpendicular to the ground on which the bicycle is moving.

Advantageously, said crankset 10 is configured to impart an additional relative rotation to one crank arm with respect to the other crank arm in such a manner as to prevent the crank arm driven by the additional relative rotation means from being vertically directed upwards with the respective distal end at a vertical maximum point S of the circumference C or top dead centre at the beginning of the pedalling push phase, which is thus made easier for the user.

Preferably, the second arc A2 of the circumference C may be arranged between the vertical minimum point I or bottom dead centre and the vertical maximum point S or top dead centre of the circumference C in the direction of rotation of the crank arms. In other words, each crank arm 16, 18 may be configured to undergo an acceleration in at least part of the circumference C, that is, during at least part of the pedalling cycle, in such a manner as to increase its speed from the first rotational speed w1 to the second rotational speed w2, and rotate at the second rotational speed w2 during at least part of the recovery phase, that is, when the crank arm is unloaded.

The angle $\alpha$ between one crank arm and the other crank arm may be proportional to the second arc A2 of the circumference C.

The second arc A2 of the circumference C may correspond to a rotation angle $\beta$ of the crank arm about the main axis of rotation x, and the crank arm which has rotated at the second rotational speed may form, with a vertical line passing through the vertical maximum point S and the vertical minimum point I of the circumference C, an angle $\gamma$ which may correspond to half the angle $\beta$.

The crank arm which has rotated at the second rotational speed may form, with the vertical line passing through the vertical maximum point S and the vertical minimum point I of the circumference C, an angle $\gamma$ supplementary to the angle $\alpha$.

The angle $\alpha$ between one crank arm and the other crank arm may be calculated with respect to the angle $\beta$, corresponding to the second arc A2 of the circumference C, using the formula:

$$\alpha = 180° - \frac{\beta}{2}$$

The angle $\gamma$ between the crank arm that has rotated at the second rotational speed and the vertical line passing through the vertical maximum point S and the vertical minimum point I of the circumference C may lie within the range between 10° and 60°.

The second arc A2 of the circumference C may correspond to a rotation angle $\beta$ of the crank arm 16, 18 about the main axis of rotation x within the range between 20° and 120°.

The angle $\alpha$ between one crank arm and the other crank arm may lie within the range between 120° and 170°.

For example, in order for an angle $\gamma$ of 30° to be present between the crank arm that has rotated at the second rotational speed and the vertical line passing through the vertical maximum point S and the vertical minimum point I of the circumference C when the other crank arm is arranged with the respective distal end 16b, 18b at the vertical minimum point I of the circumference C, the crankset 10 of the present invention may be configured to accelerate the crank arm 16, 18 during at least part of the recovery step in such a manner that its distal end 16a, 18a travels through the second arc A2 at the second speed w2, said arc corresponding to a rotation angle $\beta$ of the crank arm 16, 18 equal to twice the angle $\gamma$, that is, an angle $\beta$ equal to 60°. In such a condition, the angle $\alpha$ between one crank arm and the other crank arm may be equal to 150°.

Preferably, the crankset 10 comprises a central shaft 50, coupled with the proximal end 16b, 18b of the crank arm 16, 18 and with at least one pinion 34 engaging at least the moving ring gear 14, 14a, 14b.

The central shaft 50 may be coaxial with the fixed ring gear 12, 12a, 12b and the moving ring gear 14, 14a, 14b, and may be rotationally integral with the crank arms 16, 18.

The pinion 34 may be rotatable about its own axis of rotation, which is parallel to and radially offset with respect to the main axis of rotation x of the moving ring gear 14.

The crankset 10 having the characteristics described thus far may be implemented in various embodiments, i.e., it may be implemented as a mechanical crankset or as an electromechanical crankset.

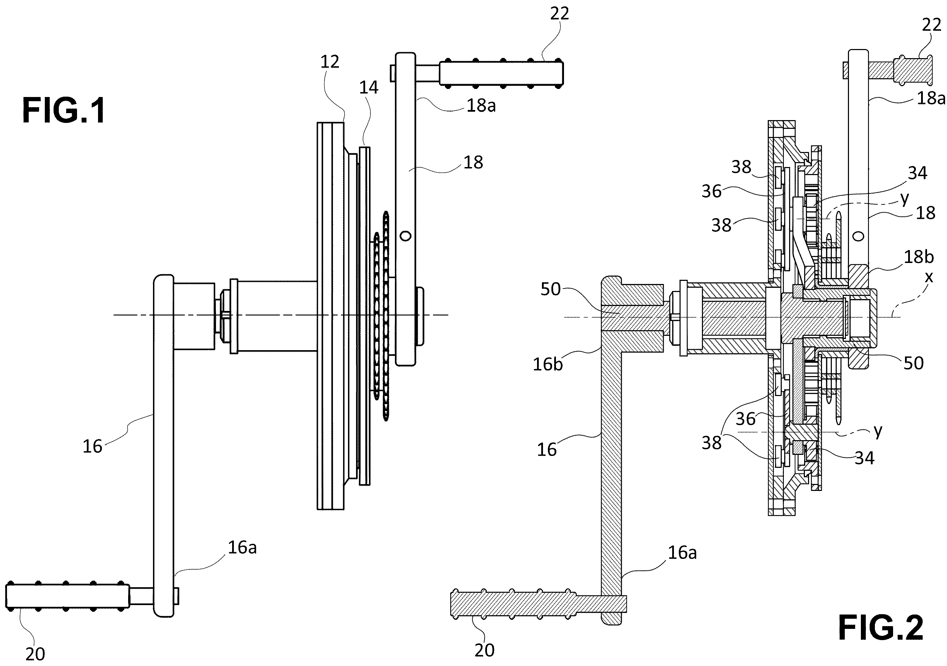

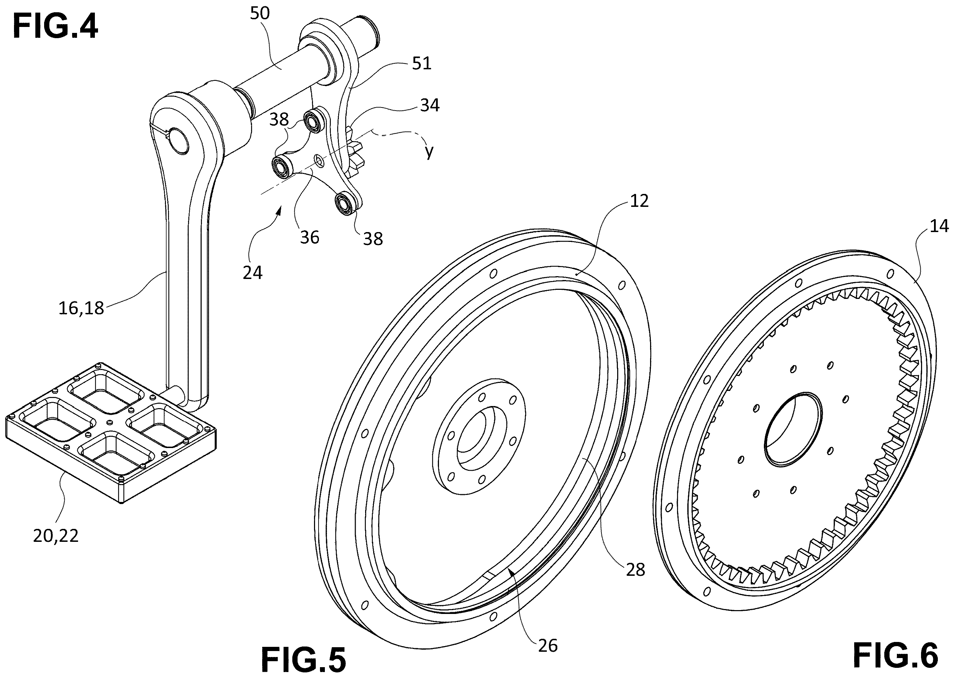

In an embodiment illustrated in figures 1-7, the crankset is of mechanical type. In said embodiment, the moving ring gear 14 of the crankset 10 is an internal toothed ring gear (figure 6) and the fixed ring gear 12 has an inner raceway 26 (figure 5). The raceway 26 has a first flat portion 28 and a second portion 30 provided with a plurality of depressions 32. The first portion 28 forms with the crank arm 16, 18 the first arc A1 of the circumference C, and the second portion 30 forms with the crank arm 16, 18 the second arc A2 of the circumference C.

In said embodiment, for each of the two crank arms 16, 18, the additional relative rotation means 24 comprise the pinion 34 and a support element 36 for supporting a plurality of bearings 38 (figure 4).

The pinion 34 and the support element 36 may be connected to the central shaft 50 by means of an intermediate element 51 rotationally integral with the central shaft 50 in such a manner that the crank arm 16, 18, the central shaft 50 and the additional relative rotation means 24 rotate integrally about the main axis of rotation x.

The pinion 34 and the support element 36 are coaxial with each other and rotationally integral about a secondary axis of rotation y.

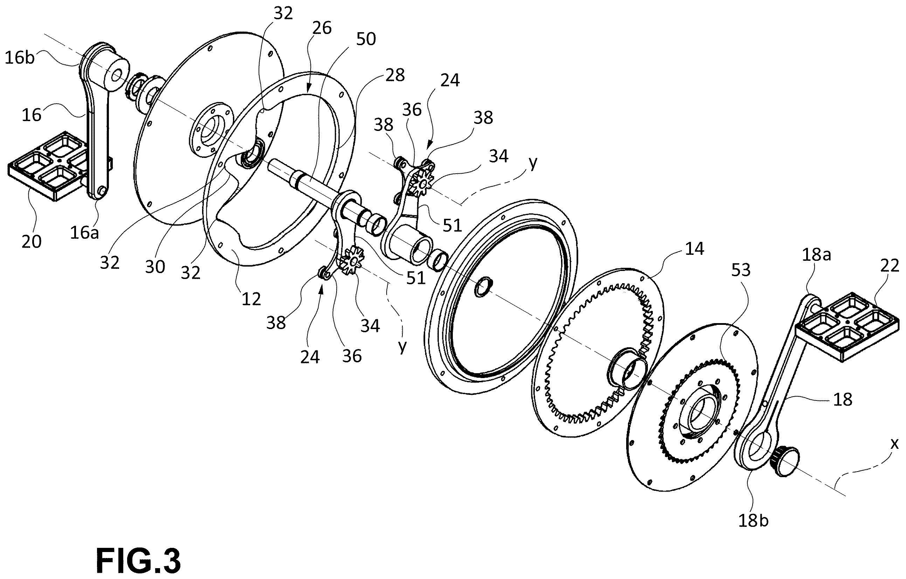

The main axis of rotation x and the secondary axis of rotation y of each crank arm 16, 18 may be parallel to each other and radially offset (figure 3).

The pinion 34 is configured to engage with the moving ring gear 14, and the support element 36 and the associated bearings 38 are configured to engage with the raceway 26 of the fixed ring gear 12 (figure 2). These engagements allow the bearings 38 to roll on the first flat portion 28 of the raceway 26 in such a manner that the crank arm 16, 18 can rotate at the first rotational speed w1 in the first arc A1 of the circumference C about the main axis of rotation x.

These engagements also allow the support element 36 and the pinion 34 to rotate about the secondary axis of rotation y on the second portion 30 of the raceway 26 in such a manner that the crank arm 16, 18 can rotate at the second rotational speed w2 in the second arc A2 of the circumference C about the main axis of rotation x.

Motion transmission means 53 may be rotationally integral with the moving ring gear 14 in such a manner as to convert the rotational motion of the crankset 10 into propulsion of the human-powered vehicle and/or apparatus, for example the propulsion of a bicycle.

The support element 36 and the depressions 32 may have shapes such that the depressions of the second portion 30 of the raceway 26 may form centres of instantaneous rotation for the support element 36. For example, the support element 36 may have an overall star shape with three, four or more radially equidistant lobes, i.e., it may have a central body portion and three, four or more protrusions extending therefrom in a radially outward direction with respect to the secondary axis of rotation y, and each connected to a respective bearing 38 (figure 4).

In said embodiment, the second arc A2 of the circumference C may be defined by the number of depressions 32 in the second portion 30 of the raceway 26 and the number of teeth of the moving ring gear 14. Preferably, the second arc A2 of the circumference C may be defined by the ratio between the number of depressions 32 of the fixed ring gear 12 and the number of teeth of the moving ring gear 14.

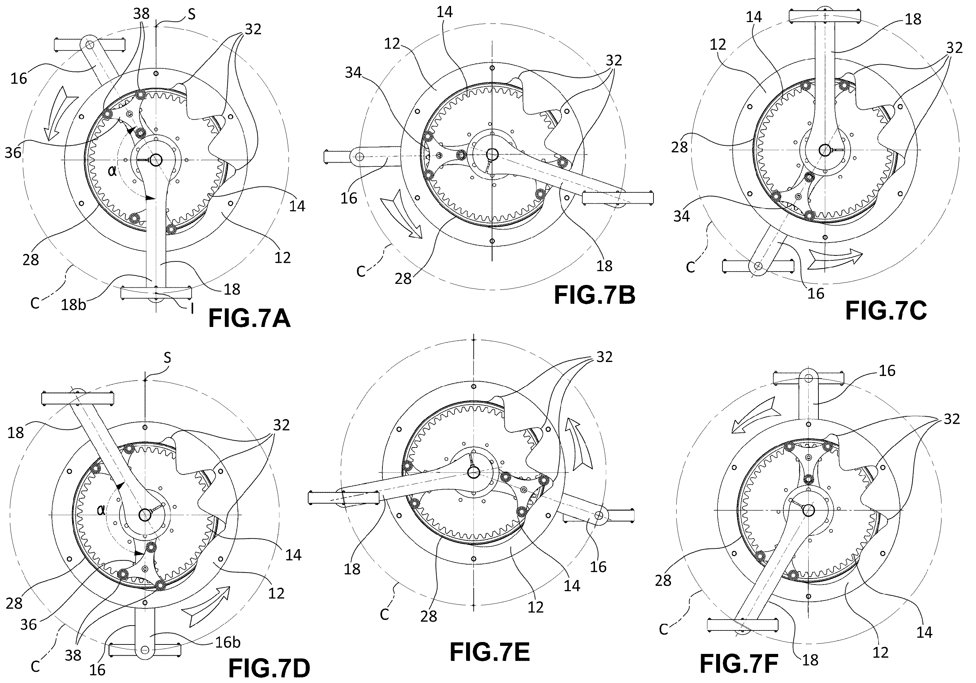

Figures 7A-7F show, by way of example, some relative positions of the crank arms 16, 18 during the pedalling cycle for the mechanical crankset embodiment described thus far.

Figure 7A shows the beginning of the pedalling push step in which the first crank arm 16 forms with the second crank arm 18 an obtuse angle $\alpha$ in the direction of rotation of the crank arms when the second crank arm 18 is arranged with its distal end 18b at the vertical minimum point I of the circumference C or bottom dead centre, in such a manner as to facilitate the pushing phase of the first crank arm 16 during pedalling. In other words, the first crank arm 16 forms an acute angle $\gamma$ in the direction of rotation of the crank arms with the line passing through the vertical maximum point S and the vertical minimum point I of the circumference C, thereby preventing the crank arm from reaching the top dead centre position.

Figures 7B and 7C show how the second crank arm 18, with its bearings 38 engaged with the depressions 32 of the second portion 30 of the raceway 26, has advanced in the direction of rotation of the crank arms by a greater amount than the first crank arm 16, whose pinion 34 is engaged with the moving ring gear 14 and whose bearings 38 are engaged with the first flat portion 28 of the raceway 26. In other words, the second crank arm 18 has moved with a higher rotational speed than the rotational speed of the first crank arm 16 during the recovery phase of the pedalling cycle.

Figures 7D-7F correspond to figures 7A-7C with the positions of the crank arms 16, 18 reversed.

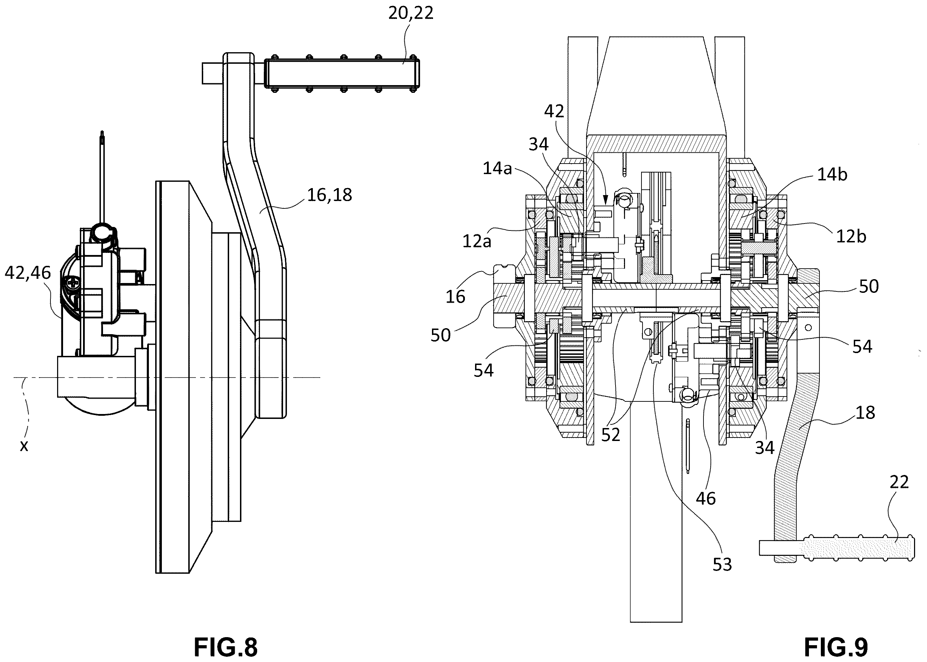

In an alternative embodiment illustrated in figures 8-12, the crankset is of electromechanical type. In said embodiment, the crankset 10 comprises a first fixed ring gear 12a and a first moving ring gear 14a coupled with the first crank arm 16, and a second fixed ring gear 12b and a second moving ring gear 14b coupled with the second crank arm 18. The fixed ring gears 12a, 12b and the moving ring gears 14a, 14b are internal toothed ring gears.

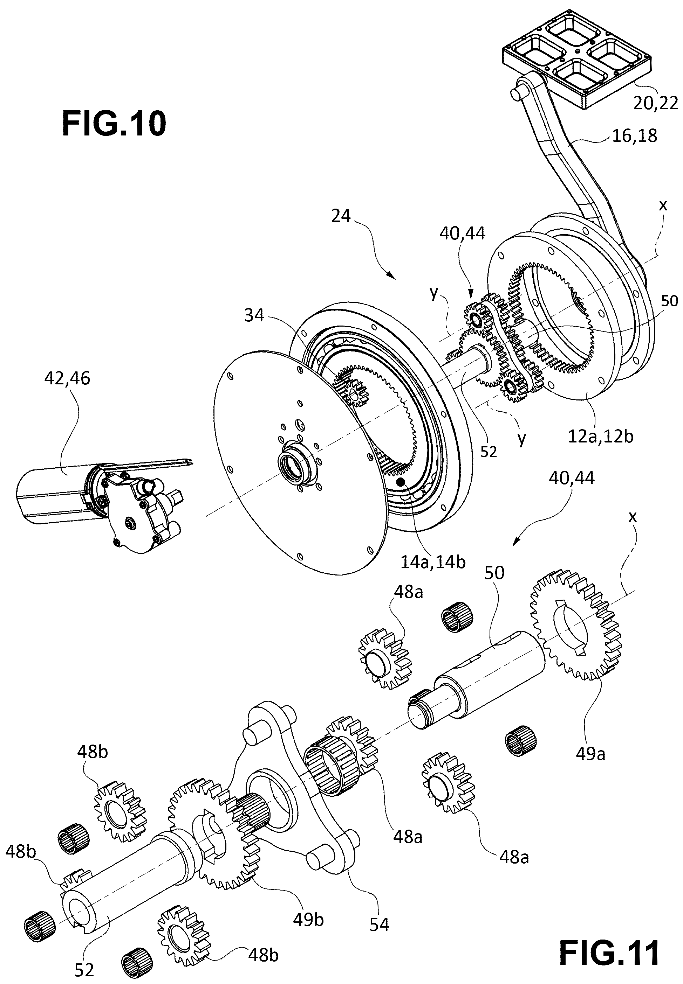

As shown in figure 10, the additional relative rotation means 24 comprise a first gear 40 coupled with the first fixed ring gear 12a and with the first moving ring gear 14a, a first pinion 34 coupled with the first moving ring gear 14a and a first motor 42 arranged to drive the first pinion 34, and a second gear 44 coupled with the second fixed ring gear 12b and with the second moving ring gear 14b, a second pinion 34 coupled with the second moving ring gear 14b and a second motor 46 arranged to drive said second pinion 34.

The first gear 40 and the second gear 44 may each comprise a plurality of toothed wheels 48a, 48b, 49a, 49b, two central shafts 50, 52 rotationally independent of one another, and a planet carrier 54 (figure 11) to form, together with the two fixed ring gears 12a, 12b and the two moving ring gears 14a, 14b, a double planetary gearset of the crank arm 16, 18 in such a manner as to allow different rotational speeds for the two central shafts 50, 52 and, hence, to allow the crank arms 16, 18 to rotate at different rotational speeds from each other.

In other words, the two planetary gearsets may each comprise a plurality of toothed wheels 48a, 48b, 49a, 49b, two central shafts 50, 52 and a planet carrier 54, but with one planetary gearset having the fixed ring gear 12a, 12b while the other has the moving ring gear 14a, 14b.

The plurality of toothed wheels 48a, 48b, 49a, 49b may comprise a first sun gear 49a and a first plurality of planet gears 48a arranged on a first face of the planet carrier 54 facing the fixed ring gear 12a, 12b, and a second sun gear 49b and a second plurality of planet gears 48b arranged on a second face of the planet carrier 54 facing the moving ring gear 14a, 14b.

The planet gears 48a arranged on the first face of the planet carrier 54 may be coaxial with the planet gears 48b arranged on the second face of the planet carrier 54 and may be rotationally integral with each other about a secondary axis of rotation y. The main axis of rotation x and the secondary axis of rotation y of each crank arm 16, 18 may be parallel to each other and radially offset (figure 10).

The central shaft 52 and the toothed wheel 49b of the first gear 40 of the first crank arm 16 may be rotationally integral with the central shaft 52 and the toothed wheel 49b of the second gear 44 of the second crank arm 18.

The central shafts 52 of the first crank arm 16 and of the second crank arm 18 may be integral with one another via transmission means 53 configured to convert the rotational movement of the crankset 10 into propulsion of the human-powered vehicle or apparatus, for example, the propulsion of a bicycle.

The couplings between the gear 40, 44, the fixed ring gear 12a, 12b and the moving ring gear 14a, 14b may allow the crank arm 16, 18 to rotate at the first rotational speed w1 in at least the first arc A1 of the circumference C about the main axis of rotation x. Such couplings may allow rotational movement about the main axis of rotation x of the shaft 50, of the sun gear 49a integral therewith, of the planet carrier 54 with the associated planet gears 48a, 48b, of the sun gear 49b integral with the central shaft 52 and of the moving ring gear 14a, 14b in such a manner that the crank arm 16, 18 may rotate at the first rotational speed w1.

The two crank arms 16, 18 may move at the first rotational speed w1 with their respective central shafts 52 being rotationally integral with each other.

The couplings between the gear 40, 44, the fixed ring gear 12a, 12b, the moving ring gear 14a, 14b, the pinion 34 and the motor 42, 46 may allow the crank arm 16, 18 to rotate at the second rotational speed w2 in the second arc A2 of the circumference C about the main axis of rotation x. Such couplings may allow the pinion 34 to be driven by the activation of the motor 42, 46 in such a manner as to rotate the moving ring gear 14a, 14b and the planet carrier 54 through the planet gears 48b. Through the engagement between the planet gears 48a, arranged on the opposite face of the planet carrier 54, and the sun gear 49a, the central shaft 50 is rotated such that the crank arm 16, 18 may rotate at the second rotational speed w2. In such a condition, the planet gears 48a and the planet gears 48b may have different rotational speeds from one another.

In this embodiment, the second arc A2 of the circumference may be defined by the activation of the motor 42, 46 and by the rotation of the pinion 34.

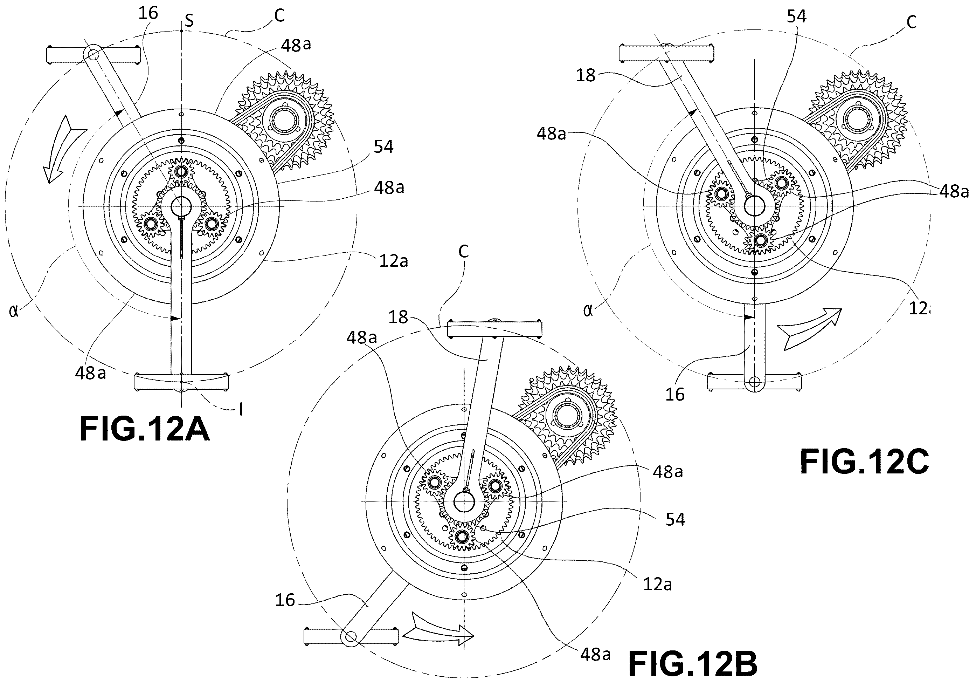

Figures 12A-12C show, by way of example, some relative positions of the crank arms 16, 18 during the pedalling cycle for the crankset embodiment described thus far. Figure 12A illustrates the beginning of the pedalling push phase, in which the first crank arm 16 forms with the second crank arm 18 an obtuse angle α in the direction of rotation of the crank arms when the second crank arm 18 is arranged with its distal end 18b at the vertical minimum point I of the circumference C or bottom dead centre, in such a manner as to facilitate the pushing phase of the first crank arm 16 during pedalling. In other words, the first crank arm 16 forms an acute angle γ in the direction of rotation of the crank arms with the line passing through the vertical maximum point S and the vertical minimum point I of the circumference C, preventing the crank arm from reaching the top dead centre position.

Figure 12C corresponds to figure 12A, with the crank arms 16, 18 reversed.

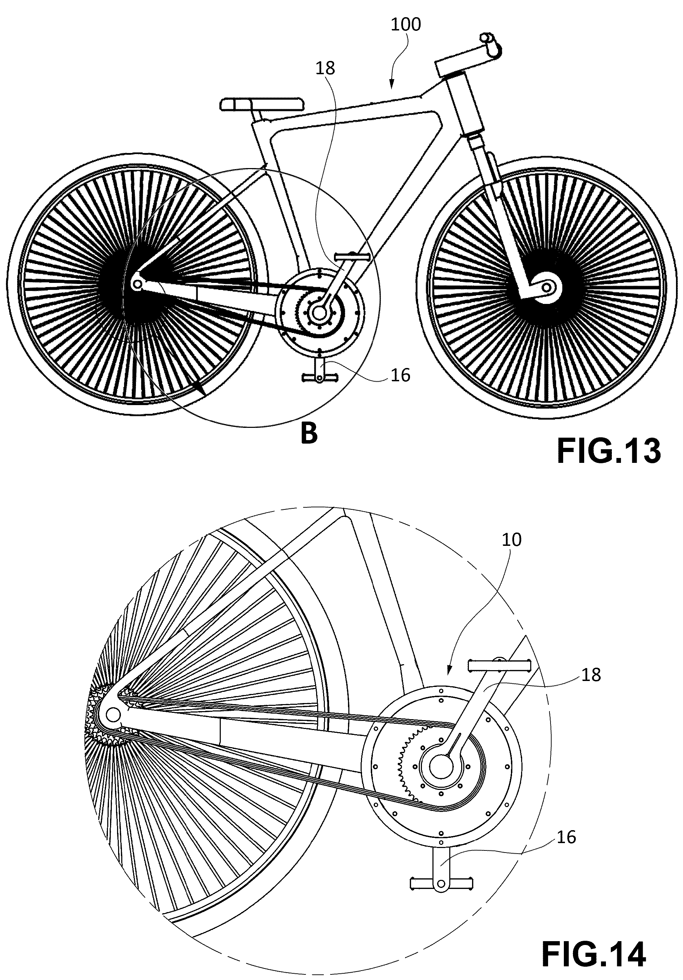

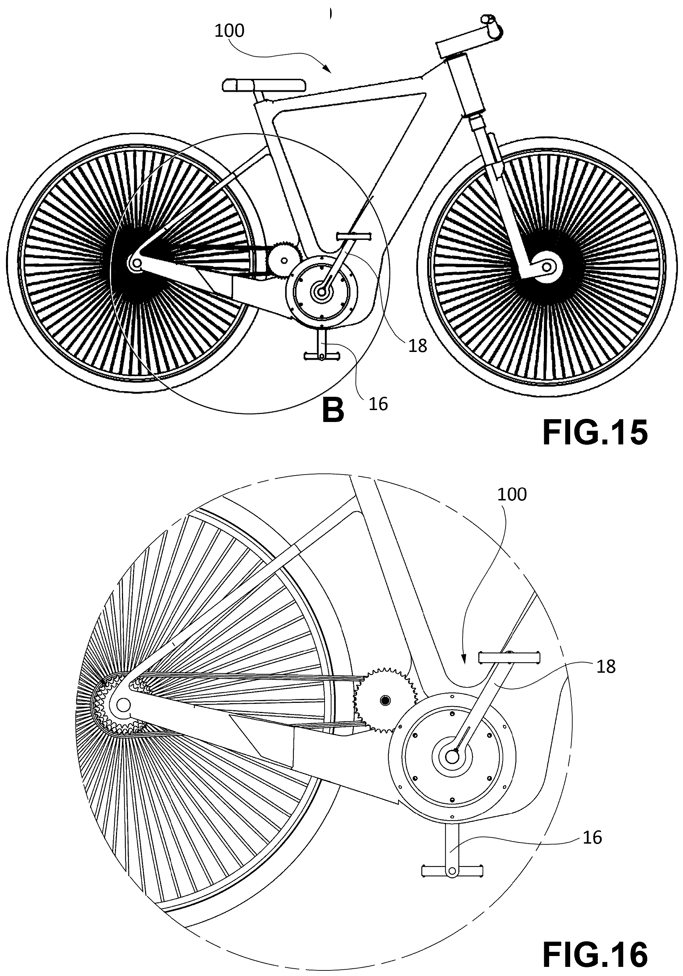

The present invention also comprises a bicycle 100 (figures 13-16) comprising a crankset 10 according to any of the mechanical or electromechanical embodiments described, and configured to impart an additional relative rotation to one crank arm relative to another crank arm of the pair of crank arms 16, 18 in such a manner as to facilitate the user's pedalling push phase by preventing the crank arm from being positioned at the top dead centre at the beginning of the push phase.

Without departing from the principle of the invention, the implementation details and embodiments may be widely varied with respect to what has been described and illustrated, without thereby departing from the scope of the present invention, as defined in the claims that follow.

## Claims

1. A crankset (10) for a human-powered vehicle and/or apparatus adapted to impart an additional relative rotation to one crank arm relative to another crank arm, said crankset (10) comprising:

   - a fixed ring gear (12) and a moving ring gear (14) coaxial to each other and defining a main axis of rotation (x),

        wherein the moving ring gear (14) is an internal toothed ring gear,
        wherein the fixed ring gear (12) has an inner raceway (26),

   - a first crank arm (16) and a second crank arm (18), each crank arm (16, 18) having a distal end (16a, 18a) configured to be coupled with a respective pedal (20, 22), and a proximal end (16b, 18b) configured to be coupled with the fixed ring gear (12) and the moving ring gear (14),

        wherein each crank arm (16, 18) is configured to be rotatable about the main axis of rotation (x) in such a manner that the distal end (16a, 18a) of the crank arm (16, 18) defines a circumference (C), and
        wherein each crank arm (16, 18) is rotatable at a first rotational speed (w1) in at least a first arc (A1) of said circumference (C), wherein the raceway (26) of the fixed ring gear (12) has a first flat portion (28) forming with the crank arm (16, 18) the first arc (A1) of the circumference (C) and a second portion (30) provided with a plurality of depressions (32) and forming with the crank arm (16, 18) a second arc (A2) of the circumference (C), and

   - additional relative rotation means (24) connected with a proximal end (16b, 18b) of the crank arm (16, 18) and with the ring gears (12, 14),

        wherein the additional relative rotation means (24) comprise, for each crank arm (16, 18), a pinion (34) and a support element (36) for supporting a plurality of bearings (38), wherein

   the pinion (34) and the support element (36) are coaxial with each other and rotationally integral about a secondary axis of rotation (y), and
   the pinion (34) is configured to engage with the moving ring gear (14) and the support element (36) and the associated bearings (38) are configured to engage with the raceway (26) of the fixed ring gear (12) in such a manner that the bearings (38) roll on the first flat portion (28) of the raceway (26) and the support element (36) and the pinion (34) rotate about the secondary axis of rotation (y) on the second portion (30) of the raceway (26), and

   wherein the additional relative rotation means (24) are configured to rotate at least one of the first (16) and the second (18) crank arms at a second rotational speed (w2), greater than the first rotational speed (w1), in the second arc (A2) of the circumference (C) in such a manner that said crank arm forms with the other crank arm an obtuse angle ($\alpha$) in the direction of rotation of the crank arms when the other crank arm is arranged with its distal end (16b, 18b) at a vertical minimum point (I) of the circumference (C).

2. A crankset (10) according to claim 1, wherein the depressions (32) of the second portion (30) of the raceway (26) form centres of instantaneous rotation for the support element (36).

3. A crankset (10) according to claim 1 or 2, wherein the second arc (A2) of the circumference (C) is defined by the number of depressions (32) in the second portion (30) of the raceway (26) and the number of teeth of the moving ring gear (14).

4. A crankset (10) for a human-powered vehicle and/or apparatus adapted to impart an additional relative rotation to one crank arm relative to another crank arm, said crankset (10) comprising:

   - a first fixed ring gear (12a), a second fixed ring gear (12b), a first moving ring gear (14a) and a second moving ring gear (14b) coaxial with one another and defining a main axis of rotation (x), wherein the fixed ring gears (12a, 12b) and the moving ring gears (14a, 14b) are internal toothed ring gears,
   - a first crank arm (16) and a second crank arm (18), each crank arm (16, 18) having a distal end (16a, 18a) configured to be coupled with a respective pedal (20, 22), and a proximal end (16b, 18b) configured to be coupled with the fixed ring gear (12a, 12b) and the moving ring gear (14a, 14b),

wherein the first fixed ring gear (12a) and the first moving ring gear (14a) are coupled with the first crank arm (16) and the second fixed ring gear (12b) and the second moving ring gear (14b) are coupled with the second crank arm (18),

wherein each crank arm (16, 18) is configured to be rotatable about the main axis of rotation (x) in such a manner that the distal end (16a, 18a) of the crank arm (16, 18) defines a circumference (C), and

wherein each crank arm (16, 18) is rotatable at a first rotational speed (w1) in at least a first arc (A1) of said circumference (C), and

- additional relative rotation means (24) connected with a proximal end (16b, 18b) of the crank arm (16, 18) and with the ring gears (12a, 12b, 14a, 14b), and

wherein the additional relative rotation means (24) comprise:

a first gear (40) coupled with the first fixed ring gear (12a) and with the first moving ring gear (14a), a first pinion (34) coupled with the first moving ring gear (14a) and a first motor (42) arranged to drive said first pinion (34), a second gear (44) coupled with the second fixed ring gear (12b) and with the second moving ring gear (14b), a second pinion (34) coupled with the second moving ring gear (14b) and a second motor (46) arranged to drive said second pinion (34), and

wherein the additional relative rotation means (24) are configured to rotate at least one of the first (16) and second (18) crank arms at a second rotational speed (w2), greater than the first rotational speed (w1), in a second arc (A2) of the circumference (C) in such a manner that said crank arm forms with the other crank arm an obtuse angle ($\alpha$) in the direction of rotation of the crank arms when the other crank arm is arranged with the respective distal end (16b, 18b) at a vertical minimum point (I) of the circumference (C).

5. A crankset (10) according to claim 4, wherein the first gear (40) and the second gear (44) each comprise a plurality of toothed wheels (48a, 48b, 49a, 49b), two central shafts (50, 52) rotationally independent of one another, and a planet carrier (54) to form, with the fixed (12a, 12b) and moving (14a, 14b) ring gears, a double planetary gearset of the crank arm (16, 18).

6. A crankset (10) according to claim 4 or 5, wherein the second arc (A2) of the circumference (C) is defined by the drive of the motor (42, 46) and the rotation of the pinion (34).

7. A crankset (10) according to any one of the preceding claims, wherein the second arc (A2) of the circumference (C) is arranged between the vertical minimum point (I) and a vertical maximum point (S) of the circumference (C) in the direction of rotation of the crank arms.

8. A crankset (10) according to any one of the preceding claims, wherein the angle ($\alpha$) between one crank arm and the other crank arm is proportional to the second arc (A2) of the circumference (C).

9. A crankset (10) according to any one of the preceding claims, comprising a central shaft (50) coupled with the proximal end (16b, 18b) of the crank arm (16, 18) and with the pinion (34) engaging at least the moving ring gear (14, 14a, 14b).

10. A bicycle (100) adapted to impart an additional relative rotation to one crank arm relative to another crank arm of the pair of crank arms (16, 18), comprising a crankset (10) according to any one of the preceding claims.

**FIG.1**

**FIG.2**

EP 4 686 645 A1

**FIG.3**

FIG.4

FIG.5

FIG.6

EP 4 686 645 A1

FIG.7A

FIG.7B

FIG.7C

FIG.7D

FIG.7E

FIG.7F

12

**FIG.8**

**FIG.9**

EP 4 686 645 A1

# FIG.10

# FIG.11

**FIG.12A**

**FIG.12B**

**FIG.12C**

**FIG.13**

**FIG.14**

100

18

B 16

**FIG.15**

100

18

16

**FIG.16**

# EUROPEAN SEARCH REPORT

**Application Number**

EP 25 19 2538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 347534 A (NAGAYAMA SEIKI KOSAKUSHO KK) 28 December 2006 (2006-12-28) * figures 1-4 * | 1-10 | INV. B62M11/14 |
| A | CA 2 436 110 A1 (BEAUDOIN NORMAND [CA]) 4 February 2005 (2005-02-04) * figures 1-40 * | 1 | |
| A | US 10 689 064 B2 (MOVE BIKES GMBH [DE]) 23 June 2020 (2020-06-23) * figures 1-3 * | 1 | |
| A | JP H04 243682 A (TAKAHASHI SATSUSHIYU SEISAKUSH) 31 August 1992 (1992-08-31) * figures 1-7 * | 1 | |
| A | JP H09 290791 A (MIMURA HIKOICHI; KABURAGI HISASHI) 11 November 1997 (1997-11-11) * figures 1-15 * | 1 | |
| A | FR 2 847 878 B1 (PIAZZA FRANCOIS [FR]) 24 June 2005 (2005-06-24) * figures 1-9 * | 1 | **TECHNICAL FIELDS SEARCHED (IPC)** B62M |
| A | WO 2004/092003 A1 (NOMA TOSHIE [JP]; NOMA MASAKATSU [JP]) 28 October 2004 (2004-10-28) * figures 1-20 * | 1 | |
| A | US 5 415 422 A (TRAMMELL JR EARL M [US]) 16 May 1995 (1995-05-16) * figures 1-7 * | 1 | |

The present search report has been drawn up for all claims

| Place of search | Date of completion of the search | Examiner |
|---|---|---|
| The Hague | 26 September 2025 | Simens, Mark Phil |

EPO FORM 1503 03.82 (P04C01)

## ANNEX TO THE EUROPEAN SEARCH REPORT
## ON EUROPEAN PATENT APPLICATION NO.

EP 25 19 2538

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | | Publication date | Patent family member(s) | | Publication date |
|---|---|---|---|---|---|
| JP 2006347534 | A | 28-12-2006 | NONE | | |
| CA 2436110 | A1 | 04-02-2005 | NONE | | |
| US 10689064 | B2 | 23-06-2020 | AU | 2017291265 A1 | 21-02-2019 |
| | | | CA | 3029557 A1 | 04-01-2018 |
| | | | CN | 110062732 A | 26-07-2019 |
| | | | EP | 3478562 A1 | 08-05-2019 |
| | | | JP | 2019524528 A | 05-09-2019 |
| | | | KR | 20190089840 A | 31-07-2019 |
| | | | US | 2019225300 A1 | 25-07-2019 |
| | | | WO | 2018002361 A1 | 04-01-2018 |
| JP H04243682 | A | 31-08-1992 | NONE | | |
| JP H09290791 | A | 11-11-1997 | JP | 2748113 B2 | 06-05-1998 |
| | | | JP | H09290791 A | 11-11-1997 |
| FR 2847878 | B1 | 24-06-2005 | NONE | | |
| WO 2004092003 | A1 | 28-10-2004 | JP | 4040653 B2 | 30-01-2008 |
| | | | JP | 2006159919 A | 22-06-2006 |
| | | | JP | WO2004092003 A1 | 06-07-2006 |
| | | | WO | 2004092003 A1 | 28-10-2004 |
| US 5415422 | A | 16-05-1995 | NONE | | |

EPO FORM P0459

For more details about this annex : see Official Journal of the European Patent Office, No. 12/82